# EUROPÄISCHE PATENTSCHRIFT

(11) **EP 0 685 992 B1**
(45) Veröffentlichungstag und Bekanntmachung des Hinweises auf die Patenterteilung: **03.12.1997**
(21) Anmeldenummer: 94928276.8
(22) Anmeldetag: 28.09.1994
(51) Int. Cl.: A01D 45/02

(54) **PFLÜCKVORSATZ FÜR EIN ERNTEGERÄT**
CROP-HARVESTER CUTTER HEAD
TETE DE COUPE POUR MOISSONNEUSE

(30) Priorität: 27.12.1993 DE 4344669
(43) Veröffentlichungstag der Anmeldung: 13.12.1995
(73) Patentinhaber: Carl Geringhoff GmbH & Co KG, D-59227 Ahlen (DE)
(72) Erfinder: WIEGERT, Ludger, D-48346 Ostbevern (DE); KRASSORT, Georg, D-48336 Sassenberg (DE)
(74) Vertreter: Habbel, Hans-Georg, Dipl.-Ing.
(86) Internationale Anmeldenummer: DE9401150
(87) Internationale Veröffentlichungsnummer: WO9517807

(56) Entgegenhaltungen:
- EP-A- 0 474 072
- EP-A- 0 486 887
- EP-A- 0 492 082
- DE-A- 1 457 996
- DE-B- 1 180 986
- FR-A- 2 599 931
- FR-A- 2 647 299
- US-A- 1 894 412
- US-A- 2 613 490

## Beschreibung

Die Erfindung bezieht sich auf einen Pflückvorsatz für ein Erntegerät gemäß dem Oberbegriff des Hauptanspruches.

Ein praxis übliches Erntegerät ist in der EP-A-0 091 635 B1 beschrieben. Das Wesentliche dieses Erntegerätes ist darin zu sehen, daß der eigentliche Pflückvorsatz Einzugsrotoren aufweist, denen feststehende Schneidmesser zugeordnet sind, die in entsprechende Schlitze der Flügel der Einzugsrotoren hineinragen und dadurch eine Zerkleinerung der Pflanze bewirken. Die Schneidmesser sind dabei beispielsweise am unteren Ende einer dem Einzugsrotor jeweils zugeordneten Teilummantelung angeordnet, wobei - da der gesamte Pflückvorsatz nach vorne hin geneigt ist - die Pflanze mittels der Einzugsrotoren erfaßt wird und durch den Pflückspalt hinuntergezogen wird, auch durch den Herunterziehvorgang eine Zerkleinerung der Pflanze durch die feststehenden Zerkleinerungsmesser erfolgt. Diese bekannte Einrichtung hat sich in der Praxis ausgezeichnet bewährt. Insbesondere ist vorteilhaft, daß die Stengel durch den Herunterziehvorgang schräg zur Längsachse geschnitten werden, so daß dadurch eine große Verrottungsfläche zur Verfügung gestellt wird, die zu einem schnellen Verrotten des gehäckselten Stengelmaterials führt.

Hierbei werden also die Pflanzenstengel auf die feststehenden Messer zugeführt und gestaucht, wobei relativ große Kräfte erforderlich sind.

Aus der gattings bilden den EP-A-0 474 072 ist ein als Vorsatzgerät für den Mähdrescher od. dgl. ausgebildetes Erntegerät bekanntgeworden, bei welchem die Schneidvorrichtung aus zwei im Abstand angeordneten, gegenläufig drehbaren Wellen besteht, auf denen mindestens eine Schneidscheibe und der Schneidscheibe benachbart ein Sternelement angeordnet sind. Die Schneidränder der zusammenwirkenden Schneidscheiben sind einander überlappend angeordnet. Bei dieser bekannten Anordnung sind also zwingend zwei Einzugsrotoren erforderlich, und die Schneidscheiben sind auf diesen Einzugsrotoren angeordnet.

Zusammen mit dem Erfassen der Pflanzenstengel erfolgt bei der bekannten Anordnung auch das Durchschneiden der Pflanzenstengel, so daß die Pflanzenstengel viel zu früh abgeschnitten werden, d. h. zu einem Zeitpunkt, wenn die Einzugsrotoren den Pflanzenstengel noch gar nicht sicher erfaßt haben, so daß der gesamte Pflanzenstengel mit dem Maiskolben in die Dreschmaschine gelangen kann, was hier zu erheblichen Störungen führen muß.

Dadurch, daß die Schneidscheiben sich überlappen und gegenseitig berühren, tritt ein enormer Verschleiß an den Schneidscheiben auf, und der Energiebedarf bei dieser bekannten Anordnung ist höher als bei der Maschine, wie sie durch die EP-A-0 091 635 B1 zum Stand der Technik gehört.

Die aus der EP-A-0 474 072 bekannte Anordnung verlangt immer zwei Einzugsrotoren, kann also nicht im Zusammenhang mit einer Teilummantelung oder einem Gegenrotor eingesetzt werden.

Der Erfindung liegt die Aufgabe zugrunde, den Kraftaufwand gegenüber den bekannten Maschinen zu verringern und weiterhin dafür Sorge zu tragen, daß die Pflanzenstengel von der oder den Einzugsrotoren sicher erfaßt sind, bevor der Schnitt erfolgt, so daß also zur Dreschmaschine nur die am Pflückspalt abgebrochenen Kolben der Maispflanzen oder sonstigen Erntepflanzen gelangen.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, die feststehenden Schneidmesser gemäß der EP-A-0 091 635 durch drehende Schneidscheiben zu ersetzen, so daß der Messerschnitt im Bereich des Stengels nicht ein drückender Schnitt ist, sondern ein ziehender, wodurch der Kraftaufwand erheblich verringert wird. Weiterhin wird gemäß der Erfindung vorgeschlagen, daß die Schneidscheiben eine eigene Schneidwalze bilden, nicht also mit dem einen oder anderen Einzugsrotor kombiniert sind und - was sehr wesentlich ist - daß die Achse der Tragwelle dieser Schneidwalze vom Pflückspalt aus gesehen tiefer als die Achse des Einzugsrotors liegt, so daß dadurch sichergestellt ist, daß die Pflanzenstengel von dem oder den Einzugsrotoren sicher erfaßt sind bevor der Schnitt erfolgt, so daß auch nach dem erfolgten Schnitt ein weiteres nach unten Durchziehen der Pflanzenstengel durch den oder die Einzugsrotoren erfolgen kann.

Gemäß der Erfindung sind verschiedene Ausführungsformen für den Pflückvorsatz möglich, ohne daß dadurch der Grundgedanke der Erfindung, wie in den Ansprüchen definiert, nämlich anstelle der feststehenden Messer eine eigene umlaufende Schneidwalze einzusetzen, verlassen wird.

Ausführungsbeispiele der erfindungsgemäßen Einrichtung gehen aus der nachfolgenden Beschreibung anhand der Zeichnungen hervor. Die Zeichnungen zeigen dabei in
- Fig. 1: eine Seitenansicht auf einen Pflückvorsatz zur Verdeutlichung des Arbeitsverfahrens, in
- Fig. 2: einen Teilschnitt und eine Frontansicht zur Verdeutlichung des Arbeitsverfahrens, in
- Fig. 3: in größerem Maßstab einen Schnitt durch eine erste Ausführungsform, in
- Fig. 4: einen Schnitt gemäß der Linie A - A in Fig. 1, in
- Fig. 5: einen Schnitt durch eine zweite Ausführungsform, in
- Fig. 6: einen Schnitt durch eine dritte Ausführungsform, in
- Fig. 7: einen Schnitt durch eine vierte Ausführungsform und in
- Fig. 8: einen Schnitt durch eine fünfte Ausführungsform gemäß der Erfindung.

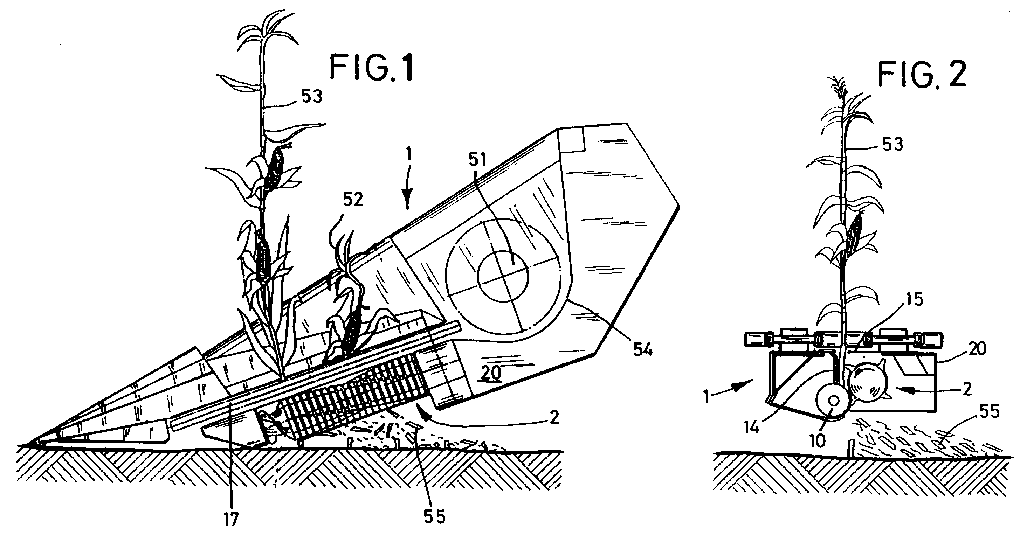

In Fig. 1 und 2 ist ein Pflückvorsatz 1 dargestellt, wobei je Pflückreihe ein in Fahrtrichtung ausgerichteter Einzugsrotor 2 vorgesehen ist, der an seiner rechten Seite von einer Teilummantelung 14 begrenzt wird. Diese Teilummantelung 14 dient als Gegenhalter für das Herunterziehen und Schneiden der Maispflanzen 52 und 53, wobei die Maispflanze 53 in der noch aufrechten Stellung dargestellt ist, während die Maispflanze 52 bereits zum Teil heruntergezogen ist, wobei der dargestellte Maiskolben an der Brechkante eines Pflückspaltes 15 anliegt. Im unteren Bereich der Teilummantelung sind Schneidwerkzeuge 10 vorgesehen, die bei dem in Fig. 2 dargestellten Ausführungsbeispiel durch Schneidscheiben einer gesonderten Schneidwalze gebildet sind. Die Schneidscheiben greifen in Schlitze des Einzugsrotors 2 ein. Beim Vorbeiführen der Maisstengel an diesen Schneidwerkzeugen kommt es zu einem Häckselvorgang. Das Abstreifen der Maiskolben erfolgt im Pflückspalt 15 mittels zweier Pflückplatten 16. Der Maiskolben wird dann mit Hilfe von Einzugsketten z. B. 17 in eine Mulde 54 gefördert, in der der Weitertransport der Maiskolben durch eine Querförderschnecke 51 erfolgt.

Das durch die Schneidwerkzeuge erzielte Häckselgut ist mit 55 in Fig. 1 und 2 dargestellt.

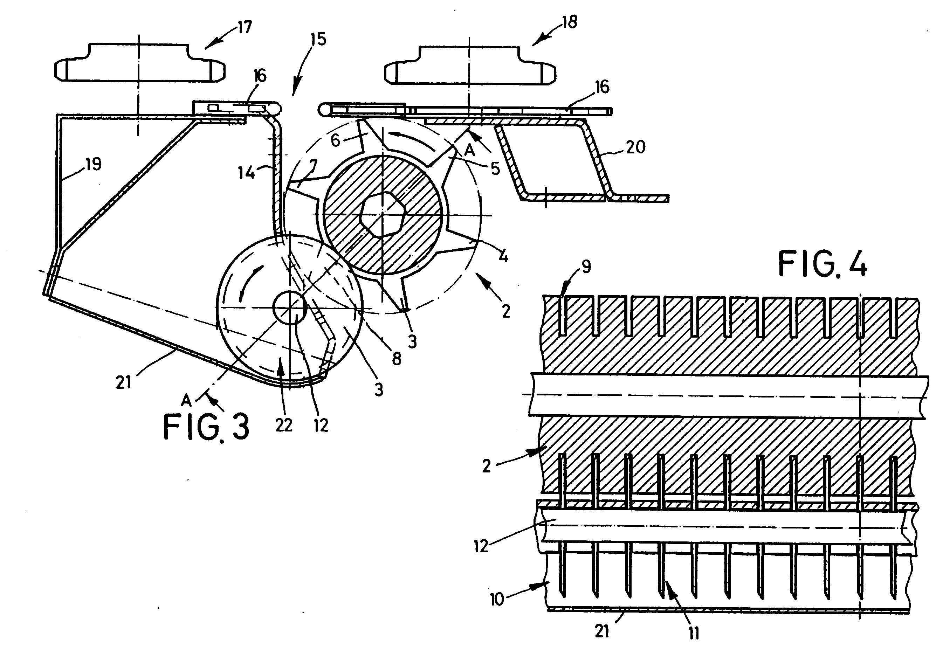

In Fig. 3 und 4 sind in größerem Maßstab eine erste Ausführungsform des erfindungsgemäßen Pflückvorsatzes dargestellt. In Fig. 3 sind Rahmenträger 19 und 20 erkennbar, wobei der Rahmenträger 19 eine Teilummantelung 14 trägt, in deren unterem Bereich eine Schneidwalze 22 angeordnet ist, die aus einer Vielzahl von Schneidscheiben 11 gebildet wird. Diese Schneidscheiben 11 sind auf einer Tragwelle 12 angeordnet und vorzugsweise sind die Schneidscheiben 11 auf der drehbar gelagerten Tragwelle 12 fest angeordnet. Die Umlaufrichtung der Schneidwalze 22 ist durch den eingezeichneten Pfeil erkennbar, ebenfalls die Umlaufrichtung des Einzugsrotors 2. Deutlich erkennbar ist, daß die Tragwelle 12 vom Pflückspalt 15 aus gesehen tiefer liegt als die Achse des Einzugsrotors 2. Hierdurch wird erreicht, daß beim Schnitt der Pflanze diese sicher und fest von der Einzugsvorrichtung (Einzugswalze 2 und Teilummantelung 14) gehalten wird. Nach unten hin wird die Einrichtung durch eine Abdeckung 21 abgeschlossen. Bei dem in Fig. 3 dargestellten Ausführungsbeispiel sind auf dem Einzugsrotor 2 sechs Flügel 3, 4, 5, 6, 7 und 8 angeordnet, die auch als Reißkanten bezeichnet werden, wobei diese Flügel 3 bis 8 über die gesamte Länge des Einzugsrotors in an sich bekannter Weise spiralförmig verdreht sind, um einen kontinuierlichen Drehmomentverlauf zu gewährleisten. In den Flügeln 3 bis 8 sind Schlitze 9 vorgesehen, in die die Schneidscheiben 11 hineinragen.

Im oberen Bereich sind auf den Rahmenträgern 19 und 20 Pflückplatten 16 vorgesehen, die einen Pflückspalt 15 begrenzen, wobei der Pflückspalt 15 im Begrenzungsbereich mit einer Brechkante ausgerüstet ist. Oberhalb der Pflückplatten 16 sind Einzugsketten 17 und 18 vorgesehen, von denen in der schematischen Darstellung gemäß Fig. 3 nur die Umlaufrotoren erkennbar sind. Die Pflückplatten 16 können hydraulisch verstellbar sein.

Die Schneidscheiben 11 der Schneidwalze 22 greifen - wie dies besonders deutlich Fig. 4 macht - in entsprechende Schlitze 9 in den Flügeln 4 bis 8 ein und teilweise noch in umlaufende Schlitze, die auch auf dem Kern des Einzugsrotors 2 vorgesehen sind.

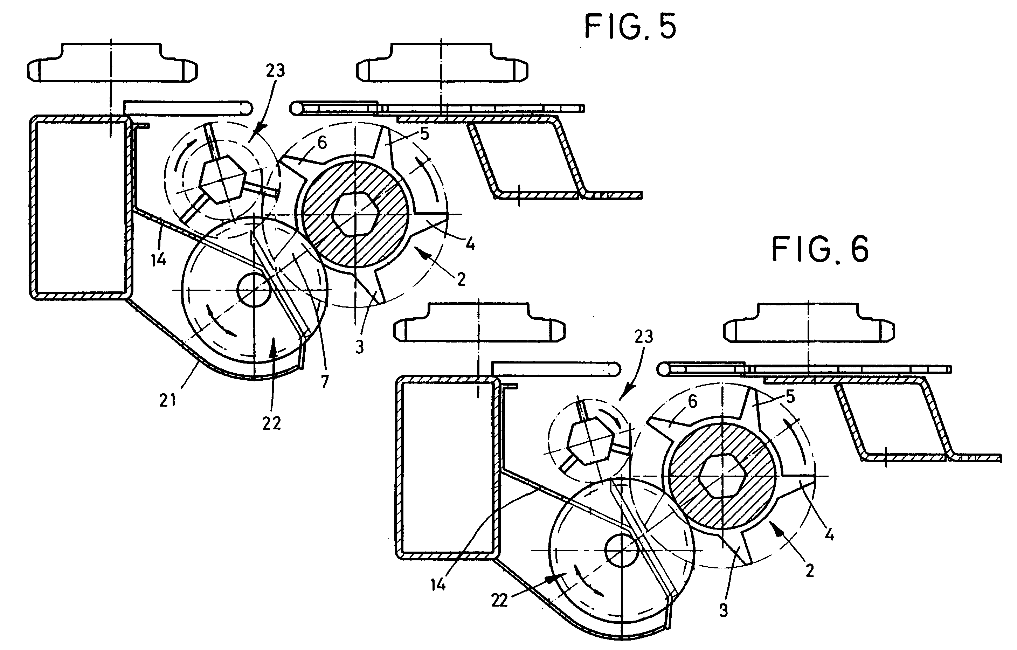

Bei der Darstellung gemäß Fig. 5 ist die Teilummantelung 14 ebenfalls erkennbar, aber im Unterschied zu Fig. 3 ist ein Gegenrotor 23 vorgesehen. Der eigentliche Einzugsrotor 2 weist nur fünf Flügel 3, 4, 5, 6 und 7 auf und der Gegenrotor 23 drei Flügel, wobei diese beiden Rotoren so gesteuert sind, daß die Flügel intermittierend ineinander eingreifen, d. h. die Enden der Flügel des Gegenrotors 23 greifen in den Hüllkreis des Einzugsrotors 2.

Die Flügel des Einzugsrotors 2 und die Flügel des Gegenrotors 3 sind dabei geschlitzt und in diese Schlitze greifen die Schneidscheiben 11 der Schneidwalze 22 ein, die entsprechend tief gelagert ist.

Bei der Ausführungsform gemäß Fig. 6 ist zwar auch ein Gegenrotor 23 vorgesehen, aber die Flügel des Gegenrotors 23 sind so kurz, daß sie nicht in den Hüllkreis der Flügel des Einzugsrotors 2 eingreifen und auch die Schneidscheiben 11 greifen nicht in entsprechende Schlitze der Flügel des Gegenrotors 23 ein.

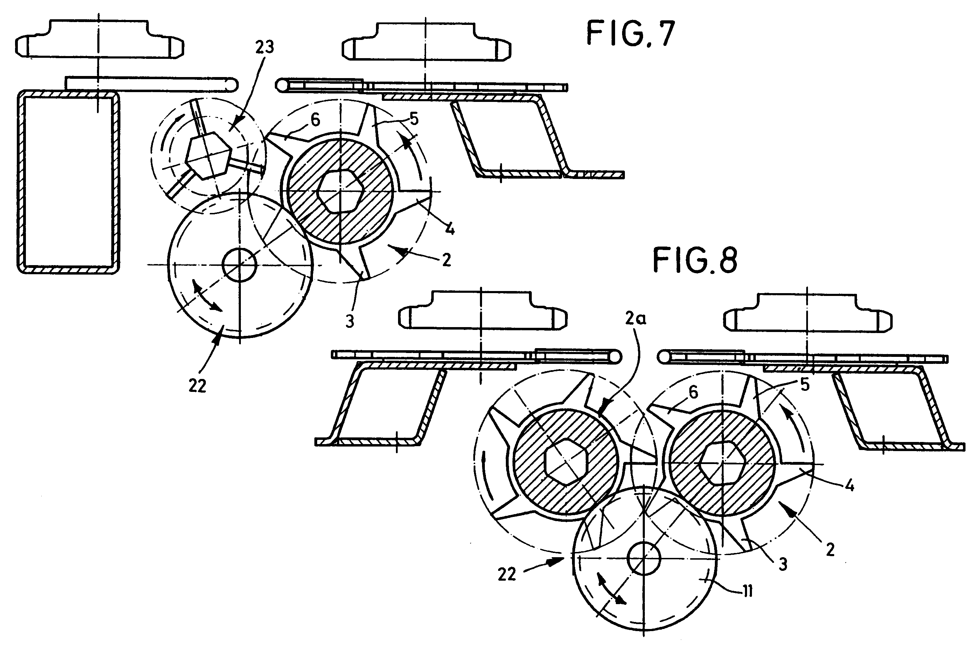

Bei der Ausführungsform gemäß Fig. 7 wird auf die Teilummantelung verzichtet, und auch bei dieser Ausführungsform sind die möglichen Umdrehungsrichtungen der rotierenden Bauteile durch Pfeile verdeutlicht.

Schließlich werden bei der Ausführungsform gemäß Fig. 8 zwei Einzugsrotoren 2 und 2a vorgesehen, die mit einer Schneidwalze 22 zusammenarbeiten.

Zu den vorbeschriebenen Ausführungsformen ist darauf hinzuweisen, daß die Schneidwalzen 22 frei rotierend sein können, und zwar einmal derart, daß die einzelnen Schneidscheiben 11 auf einer zentralen Tragwelle 12 der Schneidwalze 22 frei rotieren können oder daß die Schneidscheiben 11 fest auf der Tragwelle 12 angeordnet sind und diese nunmehr zusammen mit den Schneidscheiben 11 rotiert.

Die Rotation der Schneidwalze 22 bzw. der Schneidscheiben 11 kann frei rotierend sein oder sie können gegenläufig zur Umdrehungsrichtung des Einzugsrotors 2 angetrieben werden oder sie können mitläufig zur Umdrehungsrichtung des Einzugsrotors 2 angetrieben werden. Alle diese vorstehend genannten Möglichkeiten sind im Rahmen des erfindungsgemäßen Vorschlags durchführbar.

Allen vorbeschriebenen Ausführungsformen ist aber gemeinsam, daß die Schneidwalze 22 als eigene, separate Schneidwalze ausgebildet ist, also nicht eine Ausgestaltung des Einzugsrotors 2 ist und daß die Schneidwalze 22 bezüglich des Einzugsrotors 2 so angeordnet ist, daß der Schnitt erst beginnt, wenn der Pflanzenstengel von der Einzugsvorrichtung sicher gehalten wird, d. h. also auch nach dem Schnitt weiter nach unten gezogen werden kann.

## Patentansprüche

1. Pflückvorsatz (1) für ein Erntegerät zum Ernten von Körnerfrüchten, z. B. Mais od. dgl., mit Einzugsrotoren (2) unterhalb von Pflückspalten (15), die auf ihrem Umfang mit fest angeordneten Flügeln (3, 4, 5, 6, 7, 8) ausgerüstet sind, die Schlitze (9) aufweisen, in die von der Maschine getragene Zerkleinerungswerkzeuge (10) eingreifen, die als umlaufende Schneidscheiben (11) ausgebildet sind, dadurch gekennzeichnet, daß die Zerkleinerungswerkzeuge (10) auf einer eigenen, parallel zur Achse des Einzugsrotors (2) ausgerichteten Tragwelle (12) eine Schneidwalze (22) bildend angeordnet sind und die Achse der Tragwelle (12) vom Pflückspalt (15) aus gesehen tiefer als die Achse des Einzugsrotors (2) liegt.

2. Pflückvorsatz nach Anspruch 1, dadurch gekennzeichnet, daß die Tragwelle (12) feststehend und die darauf angeordneten Schneidscheiben (11) darauf rotierend angeordnet sind.

3. Pflückvorsatz nach Anspruch 1, dadurch gekennzeichnet, daß die Schneidscheiben (11) fest auf der Tragwelle (12) angeordnet sind und diese rotierend gelagert ist.

4. Pflückvorsatz nach einem der vorhergehenden Ansprüche mit einer dem Einzugsrotor (2) zugeordneten Teilummantelung, dadurch gekennzeichnet, daß die Schneidwalze (22) im unteren Bereich der Teilummantelung (14) angeordnet ist.

5. Pflückvorsatz nach einem der vorhergehenden Ansprüche, dadurch gekennzeichnet, daß dem Einzugsrotor (2) ein Gegenrotor (23) zugeordnet ist und die Schneidscheiben (11) in Schlitze der Flügel des Einzugsrotors (2) und des Gegenrotors (23) eingreifen.

6. Pflückvorsatz nach einem der vorhergehenden Ansprüche 1 bis 4, dadurch gekennzeichnet, daß dem Einzugsrotor (2) ein Gegenrotor (23) zugeordnet ist, aber die Schneidscheiben (11) der Schneidwalze (22) nur in Schlitze (9) der Flügel des Einzugsrotors (2) eingreifen.

7. Pflückvorsatz nach einem der vorhergehenden Ansprüche, dadurch gekennzeichnet, daß zwei gegenläufig angetriebenen Einzugsrotoren (2, 2a) eine Schneidwalze (22) zugeordnet ist.

8. Pflückvorsatz nach einem der vorhergehenden Ansprüche, dadurch gekennzeichnet, daß bei zwei gegenläufig angetriebenen Einzugsrotoren (2, 2a) die Schneidscheiben (11) der Schneidwalze (22) wahlweise in die Flügel beider Rotoren (2, 2a) eingreifen oder nur in die Schlitze (9) eines Rotors (2 oder 2a) eingreifen.

9. Pflückvorsatz nach einem der vorhergehenden Ansprüche, dadurch gekennzeichnet, daß die Schneidwalze (22) frei rotierend ausgebildet ist.

10. Pflückvorsatz nach einem der vorhergehenden Ansprüche 1 bis 8, dadurch gekennzeichnet, daß die Schneidwalze (22) gegenläufig zum Einzugsrotor (2) angetrieben ist.

11. Pflückvorsatz nach einem der vorhergehenden Ansprüche 1 bis 8, dadurch gekennzeichnet, daß die Schneidwalze (22) mitläufig zu dem Einzugsrotor (2) angetrieben ist.

## Claims

1. Picking attachment (1) for a harvester for harvesting cereals, for example corn or the like, having pull-in rotors (2) which are situated beneath picking gaps (15) and on their periphery are equipped with fixed blades (3, 4, 5, 6, 7, 8) which have slits (9) in which engage comminuting tools (10) which are carried by the machine and which are in the form of rotating cutting discs (11), characterised in that the comminuting tools (10) are arranged on their own carrier shaft (12), which is directed parallel to the axis of the pull-in rotor (2), such as to form a cutting roller (22), while the axis of the carrier shaft (12), viewed from the picking gap (15), is situated lower than the axis of the pull-in rotor (2).

2. Picking attachment according to Claim 1, characterised in that the carrier shaft (12) is stationary and the cutting discs (11) arranged thereon are arranged for rotation on it.

3. Picking attachment according to Claim 1, characterised in that the cutting discs (11) are arranged fast on the carrier shaft (12) and the latter is mounted for rotation.

4. Picking attachment according to one of the preceding claims, which has a partial covering associated with the pull-in rotor (2), characterised in that the cutting roller (22) is arranged in the bottom region of the partial covering (14).

5. Picking attachment according to one of the preceding claims, characterised in that a mating roller (23) is associated with the pull-in rotor (2) and the cutting discs (11) engage in slits in the blades of the pull-in rotor (2) and of the mating rotor (23).

6. Picking attachment according to one of the preceding Claims 1 to 4, characterised in that a mating rotor (23) is associated with the pull-in rotor (2), but the cutting discs (11) of the cutting roller (22) engage only in slits (9) in the blades of the pull-in rotor (2).

7. Picking attachment according to one of the preceding claims, characterised in that two oppositely driven pull-in rotors (2, 2a) have a cutting roller (22) associated with them.

8. Picking attachment according to one of the preceding claims, characterised in that in the case of two oppositely driven pull-in rotors (2, 2a) the cutting discs (11) of the cutting roller (22) alternatively engage in the blades of both rotors (2, 2a) or engage only in the slits (9) of one rotor (2 or 2a).

9. Picking attachment according to one of the preceding claims, characterised in that the cutting roller (22) is arranged for free rotation.

10. Picking attachment according to one of the preceding Claims 1 to 8, characterised in that the cutting roller (22) is driven in the opposite direction to the pull-in rotor (2).

11. Picking attachment according to one of the preceding Claims 1 to 8, characterised in that the cutting roller (22) is driven in the same direction as the pull-in rotor (2).

## Revendications

1. Tête de coupe (1) pour une moissonneuse destinée à récolter des grains, par exemple du maïs ou similaire, avec des rotors d'introduction (2) situés en dessous de fentes de récolte (15), qui disposent sur leur circonférence d'ailettes fixes (3, 4, 5, 6, 7, 8) présentant des fentes (9) dans lesquelles se mettent en prise des outils de hachage (10) portés par la machine, qui sont conçus comme des disques de coupe rotatifs (11), caractérisée en ce que les outils de hachage (10) sont disposés sur un axe portant propre (12) orienté parallèlement à l'axe du rotor d'introduction (2) en formant un rouleau de découpe (22) et en ce que l'axe de l'arbre portant (12) se trouve plus bas, vu de la fente de récolte (15), que l'axe du rotor d'introduction (2).

2. Tête de coupe selon la revendication 1, caractérisée en ce que l'arbre portant (12) est stationnaire et les disques de coupe (11) disposés dessus sont montés avec possibilité de rotation sur celui-ci.

3. Tête de coupe selon la revendication 1, caractérisée en ce que les disques de coupe (11) sont fixés sur l'arbre portant (12) et celui-ci est supporté avec possibilité de rotation.

4. Tête de coupe selon l'une ou l'ensemble des revendications précédentes, dotée d'une enveloppe partielle associée au rotor d'introduction (2), caractérisée en ce que le rouleau de coupe (22) est disposé dans la partie inférieure de l'enveloppe partielle (14).

5. Tête de coupe selon l'une ou l'ensemble des revendications précédentes, caractérisée en ce que le rotor d'introduction (2) est associé à un contre-rotor (23) et les disques de coupe (11) se mettent en prise dans des fentes des ailettes du rotor d'introduction (2) et du contre-rotor (23).

6. Tête de coupe selon l'une ou l'ensemble des revendications 1 à 4, caractérisée en ce que le rotor d'introduction (2) est associé à un contre-rotor (23), mais les disques de coupe (11) du rouleau de coupe (22) se mettent seulement en prise dans des fentes (9) des ailettes du rotor d'introduction (2).

7. Tête de coupe selon l'une ou l'ensemble des revendications précédentes, caractérisée en ce que deux rotors d'introduction (2, 2a) entraînés à contresens sont associés à un rouleau de coupe (22).

8. Tête de coupe selon l'une ou l'ensemble des revendications précédentes, caractérisée en ce qu'avec deux rotors d'introduction (2, 2a) entraînés à contresens, les disques de coupe (11) du rouleau de coupe (22) se mettent en prise sélectivement dans les ailettes des deux rotors (2, 2a) ou dans les fentes (9) d'un seul rotor (2 ou 2a).

9. Tête de coupe selon l'une ou l'ensemble des revendications précédentes, caractérisée en ce que le rouleau de coupe (22) est conçu de façon à tourner librement.

10. Tête de coupe selon l'une ou l'ensemble des revendications 1 à 8 précédentes, caractérisée en ce que le rouleau de coupe (22) est entraîné à contresens du rotor d'introduction (2).

11. Tête de coupe selon l'une ou l'ensemble des revendications 1 à 8 précédentes, caractérisée en ce que le rouleau de coupe (22) est entraîné dans le même sens que le rotor d'introduction (2).
